# EUROPEAN PATENT APPLICATION

(11) **EP 0 562 595 A2**
(43) Date of publication of application: **29.09.1993**
(21) Application number: 93104933.2
(22) Date of filing: 25.03.1993
(51) Int. Cl.: G11B 7/085, G11B 7/013, G11B 7/007, G11B 7/095

(54) **Apparatus for positioning optical head on a track of rotating disk**

(30) Priority: 26.03.1992 JP 67958/92; 19.05.1992 JP 125840/92; 30.11.1992 JP 319682/92
(71) Applicant: MATSUSHITA ELECTRIC INDUSTRIAL CO., LTD., Kadoma-shi, Osaka-fu, 571 (JP)
(72) Inventor: Ishibashi, Hiromichi, Toyonaka-shi, Osaka-fu, 560 (JP); Moriya, Mitsuro, Ikoma-shi, Nara-ken, 630-01 (JP)
(74) Representative: Eisenführ, Speiser & Partner

(57) **Abstract**

An optical head positioning apparatus for use with an optical disk carrier (10) with track marks of alternately differing detection polarities provided in a spiral with an odd number of track marks per single track cycle is disclosed. The apparatus has a reading head (11) for reading track marks, a tracking error detector (2) for detecting a tracking error and producing a pulsating error signal, a pulse signal inverter (1, 3, 4) for inverting the polarity of every other pulsating error signal, and producing a sinusoidal error signal. The apparatus further has a peak detector (5) for detecting a peak of the sinusoidal error signal, a one-revolution detector (8) for detecting one revolution of the disk carrier (10), and a sinusoidal signal inverter (8, OR gate, 3) for inverting the polarity of the sinusoidal error signal in response to each one revolution of the optical disk carrier. An acceleration signal is produced in response to the detection of one-revolution of the disk carrier to accelerate the head means (11) in a radial direction of the disk carrier, and a deceleration signal is produced in response to the detection of the peak of the error signal to decelerate the reading head means.

## Description

### BACKGROUND OF THE INVENTION

### 1. Field of the invention

The present invention relates to a tracking apparatus, and more particularly, to an optical head positioning apparatus for positioning an optical head on an arbitrary turn of spiral track of a rotating optical disk carrier or a magnetic disk carrier, the tracks being formatted with a half-track pitch.

### 2. Description of the prior art

A conventional tracking apparatus as described in U.S. Patent 4,332,022 is described briefly below. The data tracks of this apparatus are cut in a spiral on the optical disk media. The optical head comprises a laser emitting element, an optical receptor for tracking, and a tracking actuator to move the laser beam emitted to the optical disk carrier in minute increments. The output of the tracking receptor is supplied to a tracking error detection circuit, and the output of the tracking error detection circuit is fed back to the tracking actuator of the optical head through the tracking control circuit to effectively control disk tracking.

Because the tracks in this optical disk carrier are cut in a spiral, the laser beam moves to the adjacent track when the disk rotates one turn with the head tracking any given track. It is therefore necessary to make the head jump one track back for each full revolution of the disk if the head is to be held positioned at a single track. When the one-revolution detector detects that the optical disk has turned one full revolution, the acceleration pulse generator outputs an acceleration pulse to the tracking control circuit to accelerate the tracking actuator in the reverse direction. A zero cross detector detects when the tracking actuator has moved over the gap between tracks, and causes the deceleration pulse generator to immediately emit a pulse. The tracking actuator thus slows down to approximately zero near the middle of the track at which the tracking actuator was positioned before the optical disk turned one revolution, and the "track jump" sequence ends.

With this technology, however, tracking error detection sensitivity drops severely when the track pitch is reduced, and stable tracking control, not to mention still tracking and track jumping, becomes very difficult.

Using sample servo technologies, the present inventors have already invented a method (U.S. Patent 4,704,711) of scanning data at the conventional half track pitch without losing tracking control stability. Briefly, each track is divided into an odd number of segments, each comprising a servo area and a data area, and marks used to extract the tracking error signal are placed in each segment with mark polarity alternating in each segment.

When the conventional track jumping technology described above is applied to this method, however, the tracking actuator may jump back two tracks instead of the intended one track with each full revolution of the optical disk. In other words, because one track in the patent-pending technology described above is equivalent to one half-track in the prior art, the laser beam moves only a half track pitch with each revolution of the optical disk. When the prior art track jumping technology is adapted to this system, however, the laser beam jumps one track pitch, thus moving back two full tracks.

### SUMMARY OF THE INVENTION

Therefore, an object of the present invention is to provide an optical head positioning apparatus enabling positioning of an optical head on an arbitrary turn of spiral track of rotating optical disk carrier formatted with spiral data tracks at a half track pitch.

To achieve this object, an optical head positioning apparatus according to the present invention comprises an optical disk carrier with track marks of alternately differing polarities provided in a spiral with an odd number of track marks per single track cycle, a tracking error detector for detecting the tracking error signal from the track marks read by the optical head, an inversion circuit for sequentially inverting the polarity of the tracking error signal in the same cycle as detection of the track marks, a one-revolution detector for generating a pulse signal each time the recording carrier turns one revolution, a means for inverting the polarity of the tracking error signal according to the output pulse signal from the one-revolution detector, and a means for accelerating or decelerating the tracking actuator according to the output pulse signal from the one-revolution detector.

The second embodiment of the invention similarly comprises an optical disk carrier, tracking error detector, and inversion circuit, and further comprises a means for detecting when the optical disk carrier turns two revolutions and generating a pulse signal accordingly, and a means for accelerating or decelerating the tracking actuator according to this pulse signal.

The method of locating the track marks and track address code in this optical disk carrier is described as the third embodiment of the invention.

### BRIEF DESCRIPTION OF THE DRAWINGS

The present invention will become more fully understood from the detailed description given below and the accompanying diagrams wherein:
Fig. 1 is a block diagram of the first embodiment of an optical head positioning apparatus according to the invention,
Fig. 2 is an illustration of the structure of the optical disk carrier used to describe the operation of the first embodiment,
Figs. 3a to 3d are waveform diagrams used to describe the operation of the first embodiment,
Fig. 4 is a block diagram of the tracking error detector in the first embodiment,
Fig. 5 is a block diagram of the second embodiment of an optical head positioning apparatus according to the invention,
Figs. 6a to 6d are waveform diagrams used to describe the operation of the second embodiment,
Fig. 7 and Figs. 9a and 9b are illustrations showing locations of the wobble marks and other marks formed on the disk, and
Fig. 8 is a waveform diagram used to describe the operation using the disk of Fig. 7.

### DESCRIPTION OF PREFERRED EMBODIMENTS

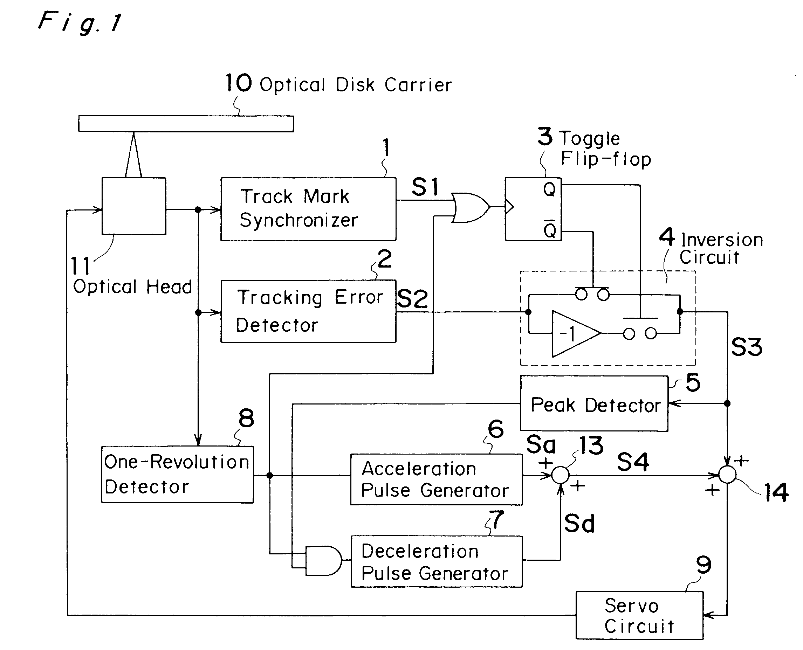

The first embodiment of an optical head positioning apparatus according to the invention is described below with reference to Fig. 1.

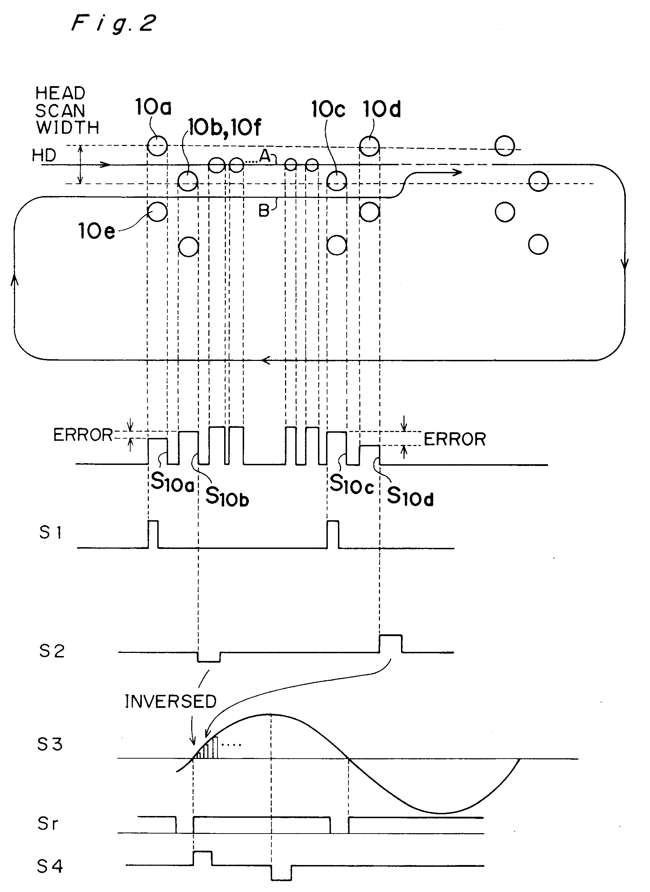

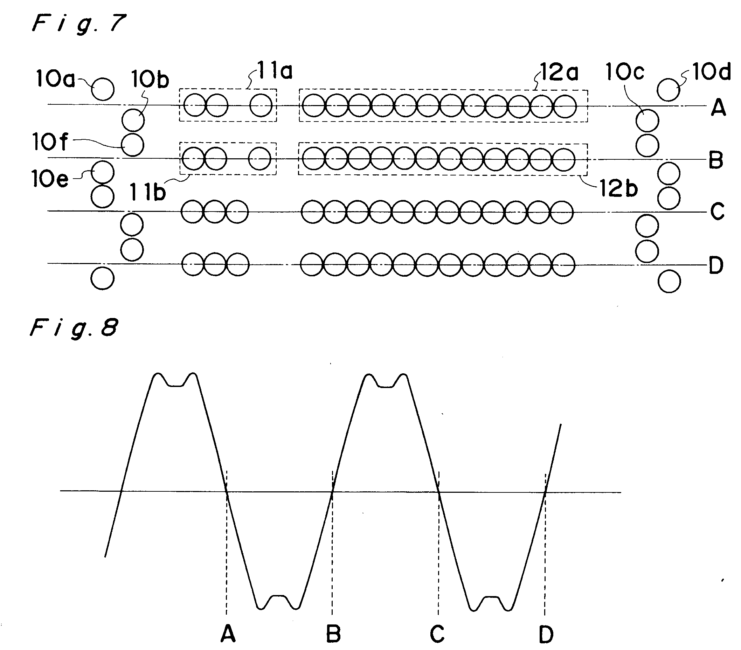

Fig. 1 is a block diagram of the first embodiment of an optical head positioning apparatus according to the invention. Wobble mark pairs 10a, 10b and 10c, 10d with alternately differing detection polarities are formed as shown in Figs. 2 and 7 on the optical disk carrier 10 shown in Fig. 1.

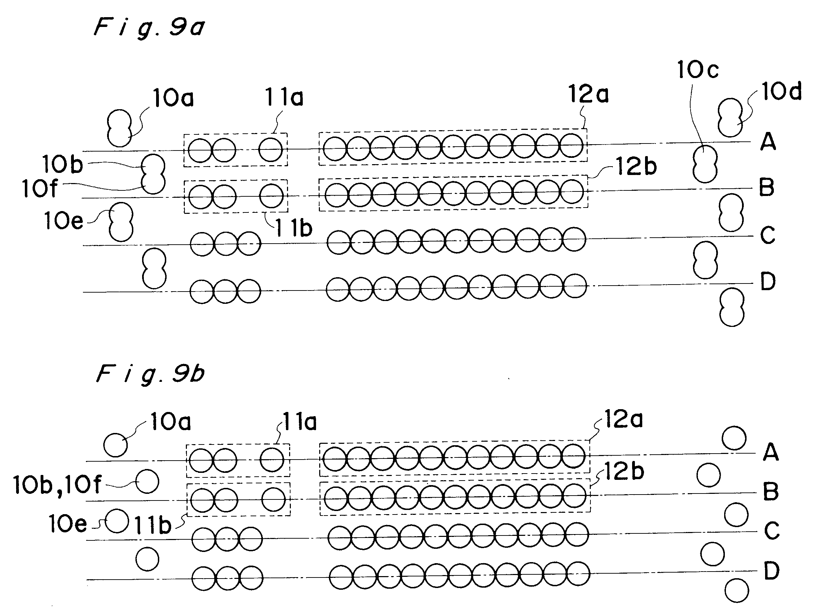

The total number of wobble mark pairs is characterized by being an odd number per single track so that aligning direction of the wobble mark pair 10a and 10b in one track and the same of the wobble mark pair 10e and 10f in the neighboring track and adjacent the wobble mark pair 10a and 10b are in opposite directions, as shown by dot-dash lines in Fig. 7. When the distance between the two tracks becomes small to increase the recording data density of the disk, adjacent wobble marks, such as 10b and 10f, merge, as shown in Figs. 9a and 9b. Fig. 2 shows the wobble marks arranged in the same manner as those shown in Fig. 9b.

The optical head 11 comprises a laser emitting element, receptor element, and a tracking actuator for moving the position of the laser beam in minute increments across the surface of the optical disk carrier 10. The track mark synchronizer 1 is a synchronization circuit that generates a pulse signal S1 in the same cycle as the wobble marks are detected. The tracking error detector 2 detects the tracking error signal from the two wobble mark pairs 10a, 10b and 10c, 10d.

The optical head 11 scans over the track A over a predetermined width HD, as shown in Fig. 2. When the head 11 scans at the center of the track A, the amplitude of the signal S₁₀ₐ picked up by the former wobble 10a would be the same as the signal S_{10b} that picked up by the latter wobble 10b. However, if the head 11 is deviated towards the next track B, as shown in Fig. 2, the amplitude of the picked up signal would be such that S₁₀ₐ<S_{10b}. Similarly, as to the next wobble mark pair 10c and 10d, the picked up signal would be such that S_{10c}>S_{10d}. The tracking error detector 2 carries out a calculation of amplitude subtraction of: former wobble detection signal minus later wobble detection signal.

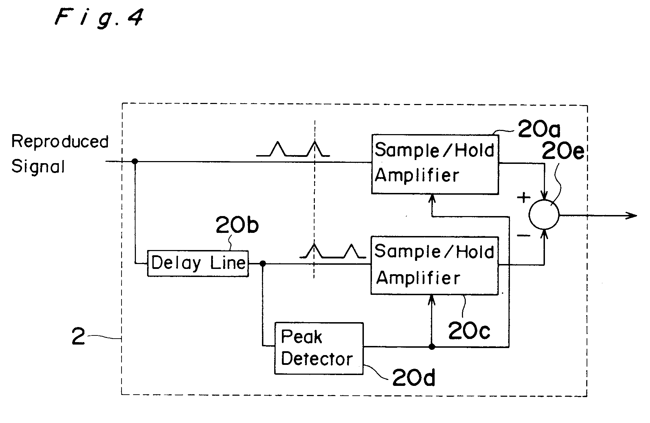

The method of detecting the tracking error signal is described briefly below with reference to Fig. 4. The tracking error detector 2 comprises sample/hold amplifiers 20a and 20c, a delay line 20b, a peak detector 20d, and a differential operator 20e. The signal reproduced by the optical head 11 is supplied directly to the first sample/hold amplifier 20a and to the other sample/hold amplifier 20c through the delay line 20b. The delay line 20b delays the reproduced signal by the time difference between detection of the former and later wobble marks. As a result, when the later wobble mark 10b (or 10d) is supplied to the sample/hold amplifiers 20a, the delayed former wobble mark 10a (or 10c) is supplied to the sample/hold amplifiers 20a at the same time. In response to the peak detection of the delayed later wobble mark by the peak detector 20d, the respective input signals are sampled and held at the output pulse, and the tracking error signal is obtained by the subtractor 20e calculating the difference between the sample hold outputs. To summarize this operation, if the laser beam is jumping from one track to the next neighboring track, one of the wobble marks will have an amplitude greater than the other, and the subtractor 20e produces a difference therebetween. Since the wobble mark pairs are aligned in zig-zag form, the signal produced from the subtractor would be altered in plus and minus directions. This is further explained below.

Since the position of the former and later wobble marks relative to the track center is reversed in each wobble mark pair, the polarity of the output from the tracking error detector 2 is reversed at each detected wobble mark pair. By sequentially reversing the logic output from the toggle flip-flop 3 in response to signal S1 from the track mark synchronizer 1, the inversion circuit 4 inverts every other error signal S2 from the tracking error detector 2. As a result, inversion circuit 4 produces a signal S3 wherein the envelop line would have a sine curve as shown in Fig. 2.

The one-revolution detector 8 detects when the optical disk carrier 10 has rotated one revolution and produces a reference signal Sr (Fig. 2) every after one complete revolution of the disk. The acceleration pulse generator 6 produces a pulse Sa (Fig. 2), in response to the reference signal, causing the tracking actuator of the optical head 11 to accelerate in the radial direction of the disk to make a jump from one track to the neighboring track. The peak detector 5 detects the maximum (minimum) point of the sinusoidal tracking error signal. The deceleration pulse generator 7 generates a pulse Sb causing the accelerated tracking actuator to decelerate. Thus an adder 13 produces a signal S4 shown in Fig. 2. The servo circuit 9 feeds the tracking error signal, and acceleration and deceleration pulse signals to the optical head 11 tracking actuator.

The operation of the an optical head positioning apparatus thus comprised is described below with reference to Figs. 1, 2, and 3.

As described above, the tracking error detection polarity of the wobble mark pairs 10a, 10b and 10c, 10d alternately inverts, and the position of each wobble mark alternates between pairs. In addition, the invention uses a disk having an odd number of wobble mark pairs per track. The tracking error detector 2 detects the tracking error signal when the laser beam scans across the first wobble mark pair 10a, 10b in track A, and detects a tracking error signal of opposite polarity when the second wobble mark pair 10c, 10d is scanned. After inversion processing by the toggle flip-flop 3 and inversion circuit 4, this tracking error signal is fed back to the optical head 11 tracking actuator for tracking control.

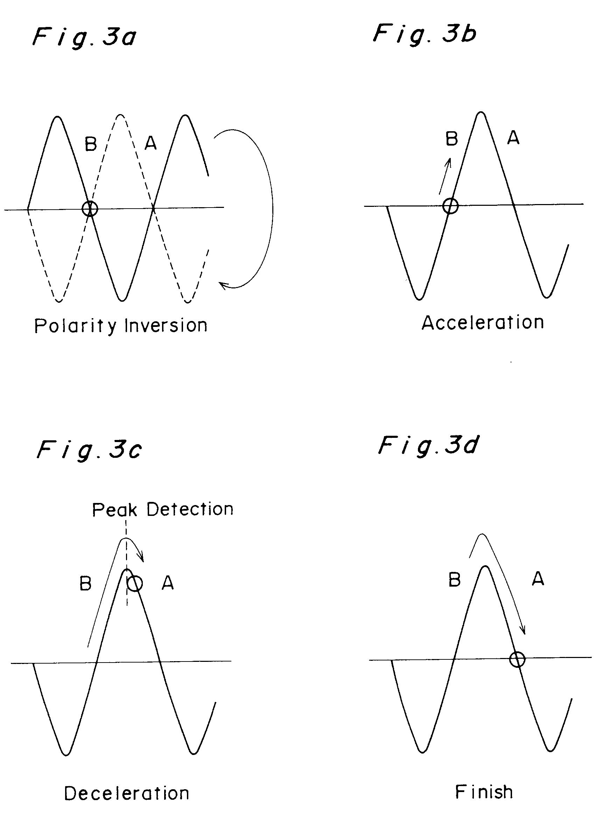

When the optical disk carrier 10 turns one full revolution, the laser beam will normally be positioned at the adjacent track B (Fig. 2) because the track is a spiral. The laser beam must therefore be jumped back to track A to enable still tracking. This jumping operation is described below with reference to Figs. 3a to 3d.

As apparent from Fig. 2, because the polarities of adjacent tracks A and B are opposite, the polarity of the tracking error signal is inverted (Fig. 3a). The polarity can be inverted by applying the output pulse from the one-revolution detector 8 to the toggle flip-flop 3 through an OR gate. The acceleration and deceleration pulses are then generated based on the reference signal Sr from the one-revolution detector 8. The acceleration pulse generator 6 first generates the acceleration pulse signal Sa to accelerate the tracking actuator by means of the servo circuit 9 (Fig. 3b). When the laser beam crosses a border between the two tracks A and B after acceleration, the detected tracking error signal S3 reaches the maximum (minimum) value. When this peak value is detected by the peak detector 5, the deceleration pulse generator 7 produces the deceleration pulse signal Sd to decelerate the tracking actuator (Fig. 3c), and the laser beam finally returns to tracking track A (Fig. 3d).

It is possible by means of this configuration to continuously still-jump from adjacent tracks A and B formatted at a half track pitch.

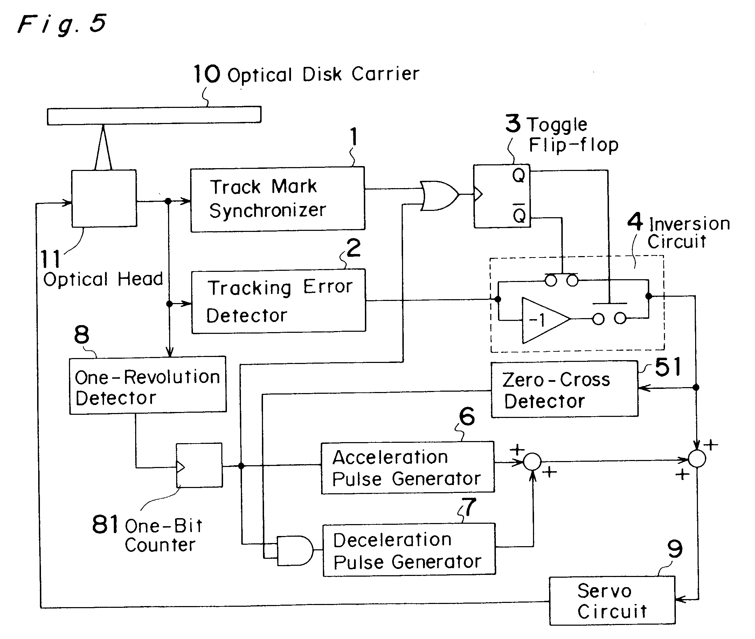

The second embodiment of the invention is described next referring to Fig. 5, a block diagram of this embodiment. The track mark synchronizer 1, tracking error detector 2, toggle flip-flop 3, inversion circuit 4, acceleration pulse generator 6, deceleration pulse generator 7, one-revolution detector 8, and servo circuit 9 in Fig. 5 are functionally equivalent to the same components in Fig. 1. This second embodiment further comprises a one-bit counter 81 and zero-cross detector 51.

The one-bit counter 81 generates one output pulse each time two one-revolution detection pulses are input, i.e., the one-bit counter 81 outputs one pulse for each two revolutions of the optical disk carrier 10. The zero-cross detector 51 outputs a pulse signal synchronized to the intersection of the tracking error signal from the inversion circuit 4 with the zero signal level.

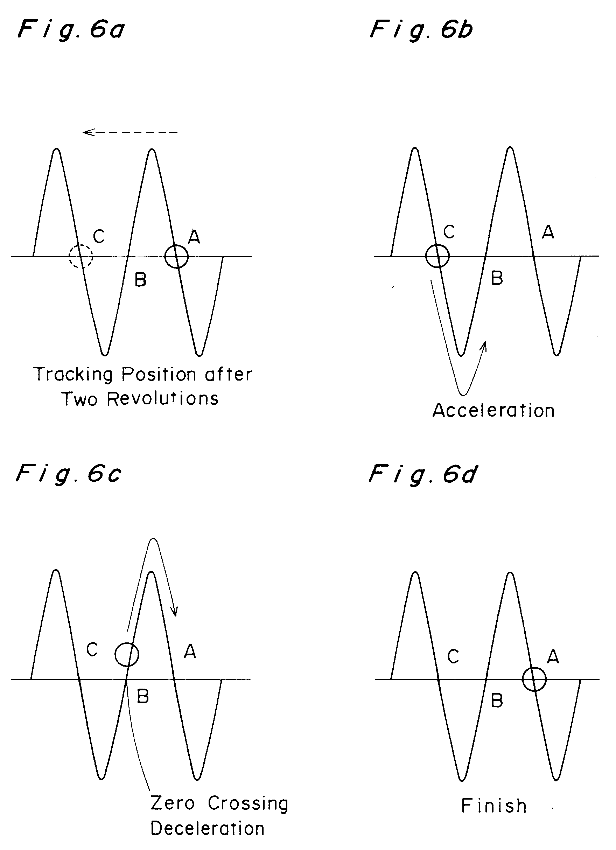

The operation of this embodiment is described below with reference to Fig. 6.

When the optical disk carrier 10 rotates two revolutions, the laser beam tracking position has moved from point A passed the adjacent track B to point C (Fig. 6a). The pulse signal is emitted from the one-bit counter 81 at this time, and the tracking actuator accelerates (Fig. 6b). When the laser beam moves passed the center line of track B, the tracking error signal intersects the zero signal level point (Fig. 6c). The deceleration pulse is thus emitted, and the laser beam is focused on track A (Fig. 6d).

In Fig. 7, wobble mark pair 10a, 10b is formed on track A, and wobble mark pair 10e, 10f is formed on track B. A track address mark 11a, 11b and data recording area 12a, 12b are also formed on tracks A and B, respectively. The track A wobble mark pair 10a, 10b and the track B wobble mark pair 10e, 10f are formed with alternately inverse detection polarities. As a result, track A wobble mark 10b and track B wobble mark 10f are formed adjacent to each other. The same address code (12a, 12b) is written to both tracks A and B. The reason for this is described below.

The wave form in Fig. 8 shows the relationship between the track and the tracking error signal obtained from the wobble marks. The tracking error signal in track A and track C has a right-declining slope (referred to as negative polarity), while the tracking error signal in track B and track D has a right-rising slope (positive polarity). While the same track identification mark 11a, 11b is recorded to both tracks A and B, the tracking polarity of track A is the inverse of track B tracking polarity. Thus, the read/write head is pulled towards track A (or C) when negative polarity tracking control is applied, and towards track B (or D) when positive polarity tracking control is applied. As a result, while the same address pattern is written to the two tracks, the tracks can be unconditionally separated using the tracking control polarity. As a result, the track address can be written with one less address bit.

The results of reducing the track pitch of the optical disk carrier 10 shown in Fig. 7 are shown in Figs. 9a and 9b. When the track pitch is narrowed a certain amount, the wobble marks 10b and 10f partially overlap. When the pitch is further narrowed, the wobble marks overlap completely, forming a single wobble mark (Fig. 9b, 10b and 10f). The configuration shown in Fig. 2 is identical to this integration of two wobble marks 10b and 10f, shown in Fig. 9b.

It is to be noted that the acceleration pulse is applied after the tracking error signal is inverted in the above embodiments, but the polarity may be inverted after the acceleration pulse is applied. In addition, tracking control can also be placed on hold or disabled while the acceleration pulse is applied.

As described above, by using an optical disk carrier 10 formatted with a spiral track having wobble mark pairs 10a, 10b and 10c, 10d of alternating polarity provided in an odd number per single track cycle, a tracking error detector 2 for detecting the tracking error signal from the wobble mark pairs read by the optical head 11, and an inversion circuit 4 for sequentially inverting the tracking error signal polarity at the track mark detection cycle, continuous scanning of adjacent half-pitch tracks A, B is possible by inverting the polarity of the tracking error signal each one revolution of the optical disk carrier, and still reproduction of a single track is possible by jumping the laser beam one-half track through polarity inversion of tracking error.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. An optical head positioning apparatus for use with an optical disk carrier (10) with track marks of alternately differing detection polarities provided in a spiral with an odd number of track marks per single track cycle, said apparatus comprising:
reading head means (11) for reading track marks;
tracking error detection means (2) for detecting a tracking error from the track marks read by the reading head means (11) and producing a pulsating error signal;
pulse signal inversion means (1, 3, 4) for inverting the polarity of every other pulsating error signal, and for producing a sinusoidal error signal;
peak detector means (5) for detecting a peak of said sinusoidal error signal;
one-revolution detection means (8) for detecting one revolution of the disk carrier (10);
sinusoidal signal inversion means (8, OR gate, 3) for inverting the polarity of the sinusoidal error signal in response to each one revolution of the optical disk carrier;
acceleration signal generator means (6) for generating an acceleration signal in response to the detection of one-revolution of the disk carrier to accelerate said head means (11) in a radial direction of said disk carrier; and
deceleration signal generator means (7) for generating a deceleration signal in response to the detection of said peak of said error signal to decelerate said reading head means.

2. An apparatus according to Claim 1 wherein each tracking mark is a pair of wobble marks.

3. An optical head positioning apparatus for use with an optical disk carrier (10) with track marks of alternately differing detection polarities provided in a spiral with an odd number of track marks per single track cycle, said apparatus comprising:
reading head means (11) for reading track marks;
tracking error detection means (2) for detecting a tracking error from the track marks read by the reading head means (11) and producing a pulsating error signal;
pulse signal inversion means (1, 3, 4) for inverting the polarity of every other pulsating error signal, and for producing a sinusoidal error signal;
two-revolution detection means (81) for detecting two revolutions of the disk carrier (10);
zero-crossing detection means (51) for detecting a zero-crossing point of said sinusoidal error signal;
acceleration signal generator means (6) for generating an acceleration signal in response to the detection of two revolutions of the disk carrier to accelerate said head means (11) in a radial direction of said disk carrier; and
deceleration signal generator means (7) for generating a deceleration signal in response to the detection of said zero-crossing point.

4. An apparatus according to Claim 3, wherein each tracking mark is a pair of wobble marks.
